(19) Europäisches Patentamt
European Patent Office
Office européen des brevets

(11) EP 1 228 145 B1

(12) **EUROPÄISCHE PATENTSCHRIFT**

(45) Veröffentlichungstag und Bekanntmachung des Hinweises auf die Patenterteilung:
**30.07.2003 Patentblatt 2003/31**

(21) Anmeldenummer: **00956473.3**

(22) Anmeldetag: **22.08.2000**

(51) Int Cl.[7]: **C08L 69/00**, C08K 5/5353, C08K 5/5357

(86) Internationale Anmeldenummer:
**PCT/EP00/08162**

(87) Internationale Veröffentlichungsnummer:
**WO 01/018119 (15.03.2001 Gazette 2001/11)**

(54) **FLAMMWIDRIGE POLYCARBONAT-BLENDS**

FLAME-RESISTANT POLYCARBONATE BLENDS

MELANGES DE POLYCARBONATE IGNIFUGEANTS

(84) Benannte Vertragsstaaten:
**AT BE CH CY DE DK ES FI FR GB GR IE IT LI LU MC NL PT SE**

(30) Priorität: **02.09.1999 DE 19941823**

(43) Veröffentlichungstag der Anmeldung:
**07.08.2002 Patentblatt 2002/32**

(73) Patentinhaber: **Bayer Aktiengesellschaft
51368 Leverkusen (DE)**

(72) Erfinder:
- **ZOBEL, Michael
D-40547 Düsseldorf (DE)**
- **ECKEL, Thomas
D-41540 Dormagen (DE)**
- **DERR, Torsten
D-41542 Dormagen (DE)**
- **WITTMANN, Dieter
D-51375 Leverkusen (DE)**

(56) Entgegenhaltungen:
**EP-A- 0 640 655**
**DE-A- 19 828 539**
**FR-A- 2 350 353**
**US-A- 5 276 066**
**US-A- 5 844 028**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 228 145 B1

## Beschreibung

Die vorliegende Erfindung betrifft mit Phosphonataminen ausgerüstete Blends auf Basis Polycarbonat und Pfropfpolymerisaten ausgewählt aus der Gruppe der Silikon-, EP(D)M- und Acrylatkautschuke als Pfropfgrundlage, die einen ausgezeichneten Flammschutz und sehr gute mechanische Eigenschaften wie Spannungsrissbeständigkeit oder Fließfähigkeit bei hoher Wärmeformbeständigkeit aufweisen.

US-P 4 073 767 und 5 844 028 beschreiben cyclische Phosphorverbindungen einschließlich Phosphorinan-Ringe als geeignete Flammschutzmittel für Polyurethane, Polycarbonate, Polyester und Polyamide. In US-P 4 397 750 werden bestimmte cyclische Phosphonatester als effiziente Flammschutzmittel für Polypropylen und andere Polyolefine beschrieben. In US-P 5 276 066 und US-P 5 844 028 werden bestimmte (1,3,2-Dioxaphosphorinanmethan) -Amine beschrieben, die geeignete Flammschutzmittel für Polyurethane, Polyester, Styrolpolymere, PVC, PVAc oder Polycarbonat darstellen.

US-P 3 505 431, FR-P 1 371 139, US-P 3 711 577, US-P 4 054 544 beschreiben acyclische Trisphosphonatamine, die z.T. halogeniert sind.

In EP-A 0 640 655 werden Formmassen aus aromatischem Polycarbonat, styrolhaltigen Copolymerisaten und Pfropfpolymerisaten beschrieben, die mit monomeren und/oder oligomeren Phosphorverbindungen flammwidrig ausgerüstet werden können.

In EP-A 0 363 608 werden flammwidrige Polymermischungen aus aromatischem Polycarbonat, styrolhaltigem Copolymer oder Pfropfcopolymer sowie oligomeren Phosphaten als Flammschutzadditve beschrieben. Für manche Anwendungen, wie beispielsweise Formteile im Innern von Gehäuseteilen, ist die Wärmeformbeständigkeit dieser Mischungen oft nicht ausreichend.

In US-P 5 061 745 werden Polymermischungen aus aromatischem Polycarbonat, ABS-Pfropfpolymerisat und/oder styrolhaltigem Copolymer und Monophosphaten als Flammschutzadditive beschrieben. Zur Herstellung dünnwandiger Gehäuseteile ist das Niveau der Spannungsrissbeständigkeit dieser Mischungen oft nicht ausreichend.

Aufgabe der vorliegenden Erfindung ist die Bereitstellung von Polycarbonat-Blends mit einer ausgezeichneten Flammfestigkeit und ausgezeichneten mechanischen Eigenschaften wie Spannungsrissstabilität, Verarbeitbarkeit und Fließfähigkeit. Dieses Eigenschaftsspektrum wird besonders bei Anwendungen im Bereich Datentechnik wie etwa für Gehäuse von Monitoren, Druckern, Printern, Kopierern usw. gefordert.

Es wurde nun gefunden, dass Blends auf Basis Polycarbonat und Pfropfpolymerisaten ausgewählt aus der Gruppe der Silikon-, EP(D)M- und Acrylatkautschuke, die Phosphonatamine enthalten, die gewünschten Eigenschaften aufweisen.

Gegenstand der Erfindung sind daher Blends enthaltend Polycarbonat und/oder Polyestercarbonat, mindestens ein kautschukelastisches Pfropfpolymerisat ausgewählt aus der Gruppe bestehend aus Silikon-, EP(D)M- und Acrylatkautschuk als Pfropfgrundlage, und 0,1 bis 30 Gew.-Teile (bezogen auf die Gesamtmischung) Phosphonatamin der Formel (I)

$$A_{3-y}\text{-N-}B_y \qquad \text{(I)},$$

in welcher
A für einen Rest der Formel (IIa)

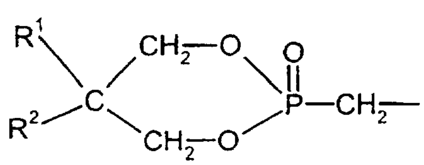

(IIa)

oder (IIb)

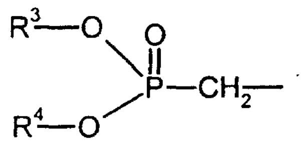

(IIb)

steht,

| | |
|---|---|
| $R^1$ und $R^2$ | unabhängig voneinander für unsubstituiertes oder substituiertes $C_1$-$C_{10}$-Alkyl oder für unsubstituiertes oder substituiertes $C_6$-$C_{10}$-Aryl, stehen, |
| $R^3$ und $R^4$ | unabhängig voneinander für unsubstituiertes oder substituiertes $C_1$-$C_{10}$-Alkyl oder unsubstituiertes oder substituiertes $C_6$-$C_{10}$-Aryl stehen oder |
| $R^3$ und $R^4$ | zusammen für unsubstituiertes oder substituiertes $C_3$-$C_{10}$-Alkylen stehen, |
| y | die Zahlenwerte 0, 1 oder 2 bedeuten und |
| B | unabhängig für Wasserstoff, gegebenenfalls halogeniertes $C_2$-$C_8$-Alkyl, unsubstituiertes oder substituiertes $C_6$-$C_{10}$-Aryl steht. |

Gegenstand der Erfindung sind vorzugsweise thermoplastische Formmassen (Blends) enthaltend

A) 40 bis 99, vorzugsweise 60 bis 98,5 Gew.-Teile aromatisches Polycarbonat und/oder Polyestercarbonat

B) 0,5 bis 60, vorzugsweise 1 bis 40, insbesondere 2 bis 25 Gew.-Teile mindestens eines kautschukelaktischen Pfropfpolymerisats, ausgewählt aus der Gruppe bestehend aus Silikon-, EP(D)M- und Acrylatkautschuken als Pfropfgrundlage,

C) 0 bis 45, vorzugsweise 0 bis 30, besonders bevorzugt 2 bis 25 Gew.-Teile mindestens eines thermoplastischen Polymers, ausgewählt aus der Gruppe der Vinyl(co)polymerisate und Polyalkylenterephthalate,

D) 0,1 bis 30 Gew.-Teile, vorzugsweise 1 bis 25 Gew.-Teile, besonders bevorzugt 2 bis 20 Gew.-Teile Phosphonatamin der Formel (I)

$$A_{3-y}NB_y \qquad (I),$$

in welcher
A, B und y die oben angegebene Bedeutung haben, und

E) 0 bis 5, vorzugsweise 0,1 bis 3, besonders bevorzugt 0,1 bis 1 Gew.-Teile, ganz besonders bevorzugt 0,1 bis 0,5 Gew.-Teile fluoriertes Polyolefin,

wobei die Summe der Gewichtsteile aller Komponenten 100 ergibt.

**Komponente A**

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigem, beispielsweise Triphenolen oder Tetraphenolen.

Diphenole zur Herstellung der aromatischen Polycarbonate und/oder aromatischen Polyestercarbonatc sind vorzugsweise solche der Formel (III)

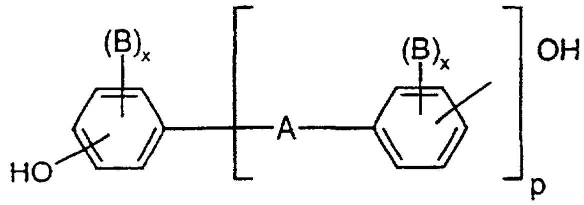

(III),

wobei

A eine Einfachbindung, $C_1$-$C_5$-Alkylen, $C_2$-$C_5$-Alkyliden, $C_5$-$C_6$-Cycloalkyliden, -O-, -SO-, -CO-, -S-, $-SO_2-$, $C_6$-$C_{12}$-Arylen, an das weitere aromatische gegebenenfalls Heteroatome enthaltende Ringe kondensiert sein können,
oder ein Rest der Formel (IV) oder (V)

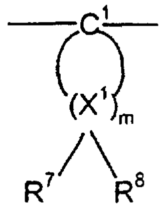

(IV)

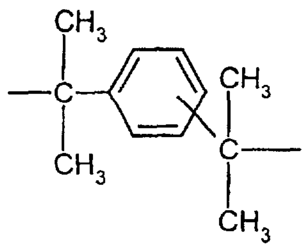

(V)

B jeweils $C_1$-$C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^7$ und $R^8$ für jedes $X^1$ individuell wählbar, unabhängig voneinander Wasserstoff oder $C_1$-$C_6$-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, dass an mindestens einen Atom $X^1$, $R^7$ und $R^8$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,1,3,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechem beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte ($M_w$, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-Patent 3 419 634) bzw. nach literaturbekannten Verfahren herstellbar. Die Herstellung Polydiorganosiloxanhaltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können, sowie aliphatische $C_2$-$C_{22}$-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

## Komponente B

Die Komponente B umfasst ein oder mehrere kautschukelastische Pfropfpolymerisate ausgewählt aus der Gruppe bestehend aus Silikon-, Acrylat- und EP(D)M-Kautschuken als Pfropfgrundlage.

Die Komponente B umfasst vorzugsweise ein oder mehrere Pfropfpolymerisate von

B.1 5 bis 95, vorzugsweise 20 bis 80, insbesondere 30 bis 80 Gew.-%, wenigstens eines Vinylmonomeren auf

B.2 95 bis 5, vorzugsweise 80 bis 20, insbesondere 70 bis 20 Gew.-% einer oder mehrerer Pfropfgrundlagen mit Glasübergangstemperaturen < 10°C, vorzugsweise < 0°C, besonders bevorzugt < -20°C ausgewählt aus der Gruppe bestehend aus Silikon-, Acrylat- und EP(D)M-Kautschuken.

Die Pfropfgrundlage B.2 hat im allgemeinen eine mittlere Teilchengröße ($d_{50}$-Wert) von 0,05 bis 5 µm, vorzugsweise 0,10 bis 0,5 µm, besonders bevorzugt 0,20 bis 0,40 µm.

Monomere B. 1 sind vorzugsweise Gemische aus

B.1.1 50 bis 99, vorzugsweise 60 bis 80 Gew.-Teilen Vinylaromaten und/oder kemsubstituierten Vinylaromaten (wie beispielsweise Styrol, α-Methylstyrol, p-Methylstyrol, p-Chlorstyrol) und/oder Methacrylsäure-($C_1$-$C_8$)-Alkylester (wie z.B. Methylmethacrylat, Ethylmethacrylat) und

B.1.2 1 bis 50, vorzugsweise 40 bis 20 Gew.-Teilen Vinylcyanide (ungesättigte Nitrile wie Acrylnitril und Methacrylnitril) und/oder (Meth)Acrylsäure-($C_1$-$C_8$)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Erfindungsgemäß geeignete Silikonkautschuke B.2 bestehen überwiegend aus Struktureinheiten

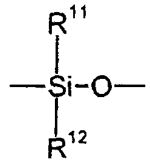

wobei

$R^{11}$ und $R^{12}$ gleich oder verschieden sein können, und $C_1$-$C_6$-Alkyl oder Cycloalkyl oder $C_6$-$C_{12}$-Aryl bedeuten.

Bevorzugte Silikonkautschuke B.2 sind teilchenförmig mit einem mittleren Teilchendurchmesser $d_{50}$ von 0,09 bis 1 µm, vorzugsweise 0,09 bis 0,4 µm und einem Gelgehalt von mehr als 70 Gew.-%, insbesondere 73 bis 98 Gew.-% und sind erhältlich aus

1) Dihalogenorganosilanen
2) 0 bis 10 Mol-%, bezogen auf 1), Trihalogensilanen und
3) 0 bis 3 Mol-%, bezogen auf 1), Tetrahalogensilanen und
4) 0 bis 0,5 Mol-%, bezogen auf 1), Halogentriorganosilanen,

wobei die organischen Reste in den Verbindungen 1), 2), 4)

α) $C_1$-$C_6$-Alkyl oder Cyclohexyl, vorzugsweise Methyl oder Ethyl,

β) $C_6$-$C_{12}$-Aryl, vorzugsweise Phenyl,

y) $C_1$-$C_6$-Alkenyl, vorzugsweise Vinyl oder Allyl,

δ) Mercapto-$C_1$-$C_6$-alkyl, vorzugsweise Mercaptopropyl

sind, mit der Maßgabe, dass die Summe (γ + δ) 2 bis 10 Mol-%,, bezogen auf alle organischen Reste der Verbindungen 1), 2) und 4) ist, und das Molverhältnis γ:δ = 3:1 bis 1:3, vorzugsweise 2:1 bis 1:2.

Bevorzugte Silikonkautschuke B.2 enthalten als organische Reste mindestens 80 Mol-% Methylgruppen. Endgruppe ist im allgemeinen eine Diorganyl-hydroxylsiloxy-Einheit, vorzugsweise eine Dimethylhydroxysiloxy-Einheit.

Für die Herstellung der Silikonkautschuke B.2 bevorzugte Silane 1) bis 4) enthalten als Halogensubstituenten Chlor.

"Erhältlich" bedeutet, dass der Silikonkautschuk B.2 nicht unbedingt aus den Halogenverbindungen 1) bis 4) hergestellt werden muss. Es sollen auch Silikonkautschuke B.2 gleicher Struktur, die aus Silanen mit anderen hydrolisierbaren Gruppen, wie z.B. $C_1$-$C_6$-Alkoxygruppen, oder aus cyclischen Suloxanoligomeren hergestellt worden sind, umfasst werden.

Als eine besonders bevorzugte Komponente B.2 werden Silikonpfropfkautschuke genannt. Diese können beispielsweise nach einem dreistufigen Verfahren hergestellt werden.

In der ersten Stufe werden Monomere wie Dimethyldichlorsilan, Vinylmethyldichlorsilan oder Dichlorsilane mit anderen Substituenten zu den durch Destillation einfach zu reinigenden cyclischen Oligomeren (Octamethylcyclotetrasiloxan oder Tetravinyltetramethylcyclotetrasiloxan) umgesetzt (vgl. Chemie in unserer Zeit 4 (1987), 121-127).

In der zweiten Stufe werden aus diesen cyclischen Oligomeren unter Zugabe von Mercaptopropylmethyldimethoxysilan durch ringöffnende kationische Polymerisation die vernetzten Silikonkautschuke erhalten.

In der dritten Stufe werden die erhaltenen Silikonkautschuke, die über pfropfaktive Vinyl- und Mercaptogruppen verfügen, mit Vinylmonomeren (oder Gemischen) radikalisch pfropfpolymerisiert.

Vorzugsweise werden in der zweiten Stufe Mischungen aus cyclischen Siloxanoligomeren wie Octamethylcyclotetrasiloxan und Tetramethyltetravinylcyclotetrasiloxan in Emulsion ringöffnend kationisch polymerisiert. Die Silikonkautschuke fallen teilchenförmig als Emulsion an.

Besonders bevorzugt arbeitet man gemäß GB-PS 1 024 014, mit Alkylbenzolsulfonsäuren, die sowohl katalytisch als auch als Emulgator wirksam sind. Nach der Polymerisation wird die Säure neutralisiert. Anstelle von Alkylbenzolsulfonsäuren können auch n-Alkylsulfonsäuren eingesetzt werden. Es ist auch möglich, neben der Sulfonsäure auch zusätzlich Co-Emulgatoren einzusetzen.

Co-Emulgatoren können nichtionisch oder anionisch sein. Als anionische Co-Emulgatoren kommen insbesondere Salze der n-Alkyl- oder Alkylbenzolsulfonsäuren in Frage. Nichtionische Co-Emulgatoren sind Polyoxyethylenderivate von Fettalkoholen und Fettsäuren. Beispiele sind POE (3)-Laurylalkohol, POE (20)-Oleylalkohol, POE (7) -Nonylalkohol oder POE (10)-Stearat. (Die Schreibweise POE (Zahl).....alkohol bedeutet, dass an ein Molekül ....alkohol soviele Einheiten Ethylenoxid addiert worden sind, wie der Zahl entsprechen. POE steht für Polyethylenoxid. Die Zahl ist ein Mittelwert.)

Die vernetzungs- und pfropfaktiven Gruppen (Vinyl- und Mercaptogruppen, vgl. organische Reste γ und δ) können in den Silikonkautschuk durch Verwendung entsprechender Siloxanoligomerer eingefügt werden. Solche sind z.B. Tetramethyltetravinylcyclotetrasiloxan, oder γ-Mercaptopropylmethyldimethoxysiloxan oder dessen Hydrolysat.

Sie werden dem Hauptoligomer, z.B. Octamethylcyclotetrasiloxan, in der zweiten Stufe in den gewünschten Mengen beigefügt.

Analog kann auch der Eiunbau längerkettiger Alkylreste, wie z.B. Ethyl, Propyl oder dgl. bzw. der Einbau von Phenylgruppen erreicht werden.

Eine ausreichende Vernetzung des Silikonkautschuks kann schon erreicht werden, wenn die Reste γ und δ bei der Emulsionspolymerisation miteinander reagieren, so dass die Zugabe eines externen Vemetzers entbehrlich sein kann. Jedoch kann ein vernetzendes Silan bei der zweiten Reaktionsstufe zugefügt werden, um den Vernetzungsgrad des Silikonkautschuks zu erhöhen.

Verzweigungen und Vernetzungen können durch Zugabe von z.B. Tetraethoxysilan oder eines Silans der Formel

$$y^1\text{-}SiX_3,$$

wobei

X eine hydrolisierbare Gruppe, insbesondere ein Alkoxy- oder Halogenrest, und

$y^1$ ein organischer Rest ist,

erzielt werden.

Bevorzugte Silane $y^1$-$SiX_3$ sind Methyltrimethoxysilan und Phenyltrimethoxysilan.

Der Gelgehalt wird bei 25°C in Aceton bestimmt (vgl. DE-AS 2 521 288, SP. 6, Z. 17 bis 37). Er beträgt bei den erfindungsgemäßen Silikonkautschuken mindestens 70 %, vorzugsweise 73 bis 98 Gew.-%.

Gepfropfte Silikonkautschuke B können durch radikalische Pfropfpolymerisation, beispielsweise analog DE-PS 2 421 288, hergestellt werden.

Zur Herstellung des gepfropften Silikonkautschuks in der dritten Stufe können die Pfropfmonomeren in Anwesenheit des Silikonkautschuks radikalisch pfropfpolymerisiert werden, insbesondere bei 40 bis 90°C. Die Pfropfpolymerisation kann in Suspension, Dispersion oder Emulsion durchgeführt werden. Bevorzugt ist die kontinuierliche oder diskontinuierliche Emulsionspolymerisation. Diese Pfropfpolymerisation wird mit Radikalinitiatoren durchgeführt (z.B. Peroxiden, Azoverbindungen, Hydroperoxiden, Persulfaten, Perphosphaten) und gegebenenfalls unter Einsatz von anionischen Emulgatoren, z.B. Carboxoniumsalzen, Sulfonsäuresalzen oder organischen Sulfaten. Dabei bilden sich Pfropfpolymerisate mit hohen Pfropfausbeuten, d.h. ein großer Anteil des Polymerisates der Pfropfmonomeren wird an den Silikonkautschuk chemisch gebunden. Der Silikonkautschuk besitzt pfropfaktive Reste, so dass besondere Maßnahmen für starke Pfropfung überflüssig sind.

Die gepfropften Silikonkautschuke können durch Pfropfpolymerisation von 5 bis 95 Gew.-Teilen, vorzugsweise 20 bis 80 Gew.-Teilen eines Vinylmonomeren oder eines Vinylmonomerengemisches auf 5 bis 95, vorzugsweise 20 bis 80 Gew.-Teile Silikonkautschuk hergestellt werden.

Ein besonders bevorzugtes Vinylmonomeres ist Styrol oder Methylmethacrylat. Geeignete Vinylmonomermischungen bestehen aus 50 bis 95 Gew.-Teilen Styrol, $\alpha$-Methylstyrol (oder anderen Alkyl- oder Halogen-kernsubstituierten Styrolen) oder Methylmethacrylat einerseits und aus 5 bis 50 Gew.-Teilen Acrylnitril, Methacrylnitril, Acrylsäure-$C_1$-$C_{18}$-alkylester, Methacrylsäure-$C_1$-$C_{16}$-alkylester, Maleinsäureanhydrid oder substituierten Maleinimiden andererseits. Als weitere Vinylmonomere können zusätzlich in kleineren Mengen Acrylsäureester von primären oder sekundären aliphatischen $C_2$-$C_{10}$-Alkoholen, vorzugsweise n-Butylacrylat oder Acryl- oder Methylacrylsäureester des tert.-Butanols, vorzugsweise t-Butylacrylat, anwesend sein. Ein besonders bevorzugtes Monomerengemisch ist 30 bis 40 Gew.-Teile $\alpha$-Methylstyrol, 52 bis 62 Gew.-Teile Methylmethacrylat und 4 bis 14 Gew.-Teile Acrylnitril.

Die so gepfropften Silikonkautschuke können in bekannter Weise aufgearbeitet werden, z.B. durch Koagulation der Latices mit Elektrolyten (Salzen, Säuren oder Gemischen davon) und anschließende Reinigung und Trocknung.

Bei der Herstellung der gepfropften Silikonkautschuke bilden sich im allgemeinen neben dem eigentlichen Pfropfcopolymerisat in bestimmtem Ausmaß auch freie Polymerisate bzw. Copolymerisate der die Pfropfhülle bildenden Pfropfmonomeren. Hier ist gepfropfter Silikonkautschuk das durch Polymerisation der Pfropfmonomeren in Gegenwart des Silikonkautschuks erhaltene Produkt, genau genommen also im allgemeinen ein Gemisch aus Pfropfcopolymerisat und freiem (Co-)Polymerisat der Pfropfmonomeren bezeichnet.

Pfropfpolymerisate auf Acrylatbasis sind vorzugsweise aus

(a) 20 bis 90 Gew.-%, bezogen auf das Pfropfpolymerisat, Acrylatkautschuk mit einer Glasübergangstemperatur unter -20°C als Pfropfgrundlage und

(b) 10 bis 80 Gew.-%, bezogen auf das Pfropfpolymerisat mindestens eines polymerisierbaren, ethylenisch ungesättigten Monomeren (vgl. B.1) als Pfropfmonomere.

Die Acrylatkautschuke (a) sind vorzugsweise Polymerisate aus Acrylsäurealkylestern, gegebenenfalls mit bis zu 40 Gew.-%, bezogen auf (a), anderer polymerisierbarcr, ethylenisch ungesättigter Monomerer. Zu den bevorzugten polymerisierbaren Acrylsäureestern gehören $C_1$-$C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole.

Die Menge der vernetzten Monomere beträgt vorzugsweise 0,02 bis 5, insbesondere 0,05 bis 2 Gew.-%, bezogen auf die Kautschukgrundlage.

Bei cyclischen vernetzenden Monomeren mit mindestens 3 ethylenisch ungesättigten Gruppen ist es vorteilhaft, die Menge auf unter 1 Gew.-% der Kautschukgrundlage zu beschränken.

Bevorzugte "andere" polymerisierbare, ethylenisch ungesättigte Monomere, die neben den Acrylsäureestem gegebenenfalls zur Herstellung der Pfropfgrundlage B.2 dienen können, sind z. B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Die Polymerisate auf Acrylatbasis sind allgemein bekannt, lassen sich nach bekannter Verfahren herstellen (z.B. EP-A 244 857) bzw. sind käufliche Produkte.

Der Gelgehalt der Pfropfgrundlage wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Als EP(D)M-Pfropfgrundlage wird mindestens ein Ethylen und Propylen enthaltendes Copolymerisat oder Terpolymerisat mit einer nur geringen Anzahl von Doppelbindungen eingesetzt (vgl. EP-A 163 411, EP-A 244 857).

Als EP(D)M-Kautschuke werden solche verwendet, die eine Glastemperatur im Bereich von -60 bis -40°C aufweisen. Die Kautschuke haben nur eine geringe Anzahl von Doppelbindungen, d.h. weniger als 20 Doppelbindungen pro 1000 C-Atome, insbesondere 3 bis 10 Doppelbindungen pro 1000 C-Atome. Beispiele für solche Kautschuke sind aus Ethylen-Propylen bestehende Copolymerisate, sowie Ethylen-Propylen-Terpolymerisate. Letztere werden durch Polymerisation von mindestens 30 Gew.-% Ethylen, mindestens 30 Gew.-% Propylen und 0,5 bis 15 Gew.-% einer nichtkonjugierten diolefinischen Komponente hergestellt. Als Terkomponente werden in der Regel Diolefine mit mindestens 5 Kohlenstoffatomen, wie 5-Ethylidennorbornen, Dicyclopentadien, 2,2,1-Dicyclopentadien und 1,4-Hexadien angewendet. Ferner sind geeignet Polyalkylenamere wie Polypentenamer, Polyoctenamer, Polydodecanamer oder Gemische dieser Stoffe. Ferner kommen auch teilhydrierte Polybutadienkautschuke in Betracht, bei denen mindestens 70 % Restdoppelbindungen hydriert sind. Von den vorstehend genannten Kautschuken werden insbesondere die Ethylen-Propylen-Copolymerisate sowie die Ethylen-Propylen-Ter-Polymerisate (EPDM-Kautschuke) angewendet. In der Regel haben EPDM-Kautschuke eine Mooney-Viskosität $ML_{1-4}$ (100°C) von 25 bis 120. Sie sind im Handel erhältlich.

Die Herstellung des Pfropfpolymerisats auf EP(D)M-Basis kann nach verschiedenen Methoden erfolgen. Vorzugsweise wird eine Lösung des EP(D)M-Elastomeren (Kautschuks) in dem Monomerengemisch und (gegebenenfalls) indifferenten Lösungsmitteln hergestellt und durch Radikalstarter, wie Azoverbindungen oder Peroxide bei höheren Temperaturen die Pfropfreaktion durchgeführt. Beispielhaft seien die Verfahren der DE-AS 23 02 014 und DE-OS 25 33 991 genannt. Es ist auch möglich wie US-PS 4 202 948 beschrieben in Suspension zu arbeiten.

## Komponente C

Die Komponente C umfasst ein oder mehrere thermoplastische Vinyl (co)polymerisate C.1 und/oder Polyalkylenterephthalate C.2.

Geeignet sind als Vinyl(co)Polymerisate C.1 Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

C.1.1 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und/oder Methacrylsäure-($C_1$-$C_8$)-Alkyle-

ster wie z.B. Methylmethacrylat, Ethylmethacrylat), und

C.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-($C_1$-$C_8$)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei.

Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise Molekulargewichte $\overline{M}_w$ (Gewichtsmittel, ermittelt durch Lichtstreuung oder Sedimentation) zwischen 15 000 und 200 000.

(Co)Polymerisate gemäß Komponente C.1 entstehen häufig bei der Pfropfpolymerisation der Komponente B als Nebenprodukte, besonders dann, wenn große Mengen Monomere B.1 auf kleine Mengen Kautschuk B.2 gepfropft werden. Die gegebenenfalls erfindungsgemäß auch einzusetzende Menge an C.1 bezieht diese Nebenprodukte der Pfropfpolymerisation von B nicht ein.

Die Polyalkylenterephthalate der Komponente C.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew.-%, bezogen auf die Diolkomponente Ethylenglykol- und/oder Butandiol-1,4-Reste.

Die bevorzugten Polyalkylenterephthalate können neben Terephthalsäureresten bis zu 20Mol-%, vorzugsweise bis zu 10Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxyphenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

## <u>Komponente D</u>

Die erfindungsgemäßen Formmassen enthalten als Flammschutzmittel wenigstens eine Phosphonataminverbindung der Formel (I)

$$A_{3-y}NB_y \quad \text{(I)},$$

in welcher

A für

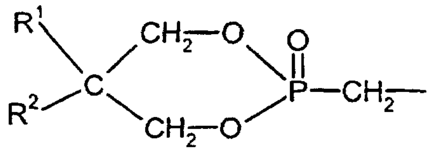

oder

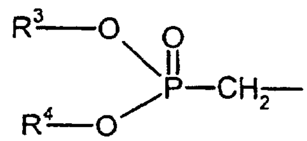

steht,
wobei

$R^1$, $R^2$, $R^3$ und $R^4$ sowie B und y die oben angegebene Bedeutung haben.

B steht vorzugsweise unabhängig für Wasserstoff, für Ethyl, n- oder iso-Propyl, welche durch Halogen substituiert sein können, unsubstituiertes oder durch $C_1$-$C_4$-Alkyl und/oder Halogen substituiertes $C_6$-$C_{10}$-Aryl, insbesondere Phenyl oder Naphthyl.

Alkyl in $R^1$, $R^2$, $R^3$ und $R^4$ steht unabhängig vorzugsweise für Methyl, Ethyl, n-Propyl, iso-Propyl, n-, iso-, sec. oder tert. Butyl, Pentyl oder Hexyl.
Substituiertes Alkyl in $R^1$, $R^2$, $R^3$ und $R^4$ steht unabhängig vorzugsweise für durch Halogen substituiertes $C_1$-$C_{10}$-Alkyl, insbesondere für ein- oder zweifach substituiertes Methyl, Ethyl, n-Propyl, iso-Propyl, n-, iso-, sec. oder tert.-Butyl, Pentyl oder Hexyl.
$R^3$ und $R^4$ bilden zusammen mit dem Kohlenstoff, an das sie gebunden sind, vorzugsweise Cyclopentyl, Cyclohexyl, Cycloheptyl oder Cyclooctyl, insbesondere Cyclopentyl oder Cyclohexyl.
$C_6$-$C_{10}$-Aryl steht in $R^1$, $R^2$, $R^3$ und $R^4$ unabhängig vorzugsweise für Phenyl, Naphthyl oder Binaphthyl, insbesondere o-Phenyl, o-Naphthyl, o-Binaphthyl, welche durch Halogen (im allgemeinen ein-, zwei- oder dreifach) substituiert sein können.
Beispielhaft und vorzugsweise werden genannt: 5,5,5',5',5",5"-Hexamethyltris(1,3,2-dioxaphosphorinan-methan)amino-2,2',2"-trioxid der Formel (I-1)

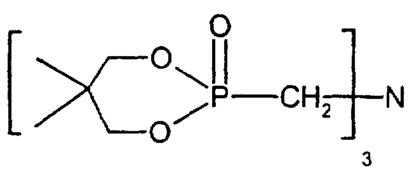

(I-1)

(Versuchsprodukt XPM 1000 Fa. Solutia Inc., St. Louis, USA)
1,3,2-Dioxaphosphorinan-2-methanamin, N-butyl-N[(5,5-dimethyl-1,3,2-dioxaphosphorinan-2-yl)methyl]-5,5-dimethyl-, P,2-dioxide; 1,3,2-Dioxaphosphorinane-2-methanamin, N-[[5,,5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorinan-2-methanimin, N-[(5,5-dimethyl-1,3,2-dioxaphosphorinan-2-yl)methyl]-N-ethyl-5,5-dimethyl-, P,2-dioxid, 1,3,2-Dioxaphosphorinan-2-methanamin, N-butyl-N-[(5,5-dichloromethyl-1,3,2-dioxaphosphorinan-2-yl)-methyl]-5,5-di-chloromethyl-, P,2-dioxid, 1,3,2-Dioxaphosphorinan-2-methanamin, N-[(5,5-di-chloromethyl-1,3,2-dioxoaphosphorinan-2-yl)methyl]-5,5-dichloromethyl-N-phenyl-, P,2-dioxid; 1,3,2-Dioxaphosphorinan-2-methanamin, N,N-di-(4-chlorobutyl)-5,5-dimethyl-2-oxide; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P2-dioxid.
Bevorzugt sind weiterhin:
Verbindungen der Formel (I-2) oder I-3)

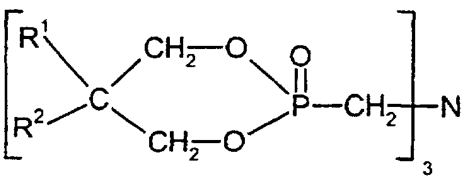

(I-2)

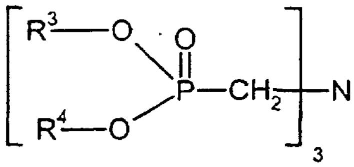

(I-3)

wobei
$R^1$, $R^2$, $R^3$ und $R^4$ die oben angegebenen Bedeutungen haben.

Besonders bevorzugt sind Verbindungen der Formel (I-2), (I-1). Besonders bevorzugt sind auch die oben genannten Einzelverbindungen.

Die Verbindungen der Formel (I) können nach folgenden Verfahren hergestellt werden:

a) $PCl_3$ wird zu einer Mischung von 1,3-Diol-Derivaten, Wasser und einem organischen Lösungsmittel bei einer Temperatur von 10-60°C zugegeben. Man erhält dabei ein 5,5-disubstituiertes 1,3,2-Dioxaphosphorinan-2-oxid der Formel (Ia)

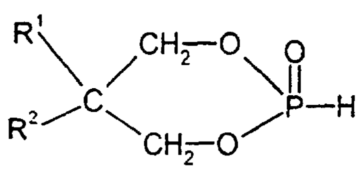

(Ia),

wobei $R_1$ und $R_2$ die oben genannte Bedeutung haben,

b) nach Reinigung wird das 1,3,2-Dioxaphosphorinan-2-oxid in Paraformaldehyd mit einem Amin $B_yNH_{3-y}$, wobei B und y die oben genannte Bedeutung haben, zur Reaktion gebracht,

c) nach erneuter Reinigung und Trocknung wird das Phosphonatamin der Formel (I) erhalten.

Eine detailierte Beschreibung des Herstellungsverfahren kann aus US-Patentschrift 5 844 028 entnommen werden.

<u>**Komponente E**</u>

Die fluorierten Polyolefine E sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser $d_{50}$ von 0,05 bis 1 000, vorzugsweise 0,08 bis 20 µm. Im allgemeinen haben die fluorierten Polyolefine E eine Dichte von 1,2 bis 2,3 g/cm$^3$. Bevorzugte fluorierte Polyolefine E sind Polytetrafluorethylen, Polyvinylidenfluorid, Tetrafluorethylen (Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-*654;* "Modern Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wässrigem Medium mit einem freie Radikale bildenden Katalysator, beispielsweise Natrium-, Kalium- oder Ammoniumperoxidisulfat bei Drucken von 7 bis 71 kg/cm$^2$ und bei Temperaturen von 0 bis 200°C, vorzugsweise bei Temperaturen von 20 bis 100°C. (Nähere Einzelheiten s. z. B. US-Patent 2 393 967). Je nach Einsatzform kann die Dichte dieser Materialien zwischen 1,2 und 2,3 g/cm$^3$, die mittlere Teilchengröße zwischen 0,5 und 1 000 µm liegen.

Erfindungsgemäß bevorzugte fluorierte Polyolefine E sind Tetrafluorethylenpolymerisate mit mittleren Teilchendurchmesser von 0,05 bis 20 µm, vorzugsweise 0,08 bis 10 µm, und eine Dichte von 1,2 bis 1,9 g/cm$^3$ und werden vorzugsweise in Form einer koagulierten Mischung von Emulsionen der Tetrafluorethylenpolymerisate E mit Emulsionen der Pfropfpolymerisate eingesetzt.

Weitere erfindungsgemäß bevorzugte Zubereitungen sind die fluorierten Polyolefine E:

E.1) als koagulierte Mischung mit mindestens einer der Komponenten A bis C, wobei das fluorierte Polyolefin E bzw. Polyolefingemisch als Emulsion mit mindestens einer Emulsion der Komponenten A bis C gemischt und anschließend koaguliert wird oder

E.2) als Präcompound mit mindestens einer der Komponenten A bis C, wobei die fluorierten Polyolefine E als Pulver mit einem Pulver oder einem Granulat mindestens einer der Komponenten A bis C vermischt und in der Schmelze, im allgemeinen bei Temperaturen von 208°C bis 330°C in den üblichen Aggregaten wie Innenkneter, Extruder oder Doppelwellenschnecken, compoundiert wird.

Bevorzugte Zubereitungen für die fluorierten Polyolefine E sind koagulierte Mischungen mit einem Pfropfpolymerisat B oder einem Vinyl(co)polymerisat C.

Geeignete, in Pulverform einsetzbare fluorierte Polyolefine E sind Tetrafluorethylenpolymerisate mit mittleren Teilchendurchmesser von 100 bis 1 000 µm und Dichten von 2,0 g/cm$^3$ bis 2,3 g/cm$^3$.

Zur Herstellung einer koagulierten Mischung aus Pfropfpolymerisat und Komponente E wird zuerst eine wässrige Emulsion (Latex) eines Pfropfpolymerisates B mit einer feinteiligen Emulsion eines Tetrafluorethylenpolymerisates E vermischt; geeignete Tetrafluorethylenpolymerisat-Emulsionen besitzen üblicherweise Feststoffgehalte von 30 bis 70 Gew-.%, insbesondere von 50 bis 60 Gew.-%, vorzugsweise von 30 bis 35 Gew.-%.

Die Mengenangabe bei der Beschreibung der Komponente A, B und C enthält nicht den Anteil des Pfropfpolymerisats, Vinyl(co)polymerisat bzw. Polycarbonat für die koagulierte Mischung gemäß E.1) und E.2).

In der Emulsionsmischung liegt das Gleichgewichtsverhältnis Pfropfpolymerisat B bzw. (Co)polymerisat zum fluorierten Polyolefin E bei 95:5 bis 60:40, vorzugsweise 90:10 bis 50:50. Anschließend wird die Emulsionsmischung in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C getrocknet werden.

Geeignete Tetrafluorethylenpolymerisat-Emulsionen sind handelsübliche Produkte und werden beispielsweise von der Firma DuPont als Teflon® 30 N angeboten.

Die erfindungsgemäßen Formmassen können weingstens eines der üblichen Additive, wie Gleit- und Entformungsmittel, Nukleiermittel, Antistatika, Stabilisatoren sowie Farbstoffe und Pigmente enthalten.

Die erfindungsgemäßen Formmassen können bis zu 35 Gew.-%, bezogen auf die Gesamt-Formmasse, eines weiteren, gegebenenfalls synergistisch wirkenden Flammschutzmittels enthalten. Beispielhaft werden als weitere Flammschutzmittel organische Phosphorverbindungen wie Triphenylphosphat oder m-Phenylen-bis-(diphenylphosphat), organische Halogenverbindugen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Hydroxoantimonat, Zirkonoxid, Zirkonhydroxid, Molybdenoxid, Ammoniummolybdat, Zinkborat, Ammoniumborat, Bariummetaborat, Talk, Silikat, Siliciumoxid und Zinnoxid sowie Siloxanverbindungen genannt.

Weiterhin sind als Flammschutzmittel Phosphorverbindungen der Formel (VI) geeignet,

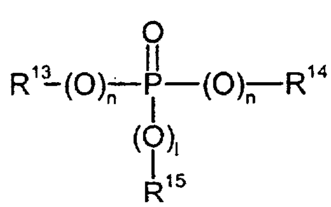

(VI),

in der

$R^{13}$, $R^{14}$ und $R^{15}$ unabhängig voneinander ein gegebenenfalls halogeniertes $C_1$-$C_8$-Alkyl oder ein gegebenenfalls halogeniertes und/oder alkyliertes $C_5$- oder $C_6$-Cycloalkyl oder ein gegebenenfalls halogeniertes und/oder alkyliertes und/oder aralkyliertes $C_6$-$C_{30}$-Aryl, und

"n" und "1" unabhängig voneinander 0 oder 1 sind.

Diese Phosphorverbindungen sind generell bekannt (siehe beispielsweise Ullmann, Enzyklopädie der technischen Chemie, Band 18, Seiten 301 ff, 1979 und EP-A 345 522). Die aralkylierten Phosphorverbindungen sind beispielsweise in der DE-OS 38 24 356 beschrieben.

Gegebenenfalls halogenierte $C_1$-$C_8$-Alkylreste gemäß (VI) können einfach oder mehrfach halogeniert, linear oder verzweigt sein. Beispiele für Alkylreste sind Chlorethyl, 2-Chlorpropyl, 2,3-Dibrompropyl, Butyl, Methyl oder Octyl.

Gegebenenfalls halogenierte und/oder alkylierte $C_5$-oder $C_6$-Cycloalkyle gemäß (VI) sind gegebenenfalls einfach bis mehrfach halogenierte und/oder alkylierte $C_5$- oder $C_6$-Cycloalkyle, also z.B. Cyclopentyl, Cyclohexyl, 3,3,5-Trimethylcyclohexyl und vollchloriertes Cyclohexyl.

Gegebenenfalls halogenierte und/oder alkylierte und/oder aralkylierte $C_6$-$C_{30}$-Arylreste gemäß (VI) sind gegebenenfalls ein oder mehrkernig, einfach oder mehrfach halogeniert und/oder alkyliert und/oder aralkyliert, z.B. Chlorphenyl, Bromphenyl, Pentachlorphenyl, Pentabromphenyl, Phenyl, Kresyl, Isopropylphenyl, benzylsubstituiertes Phenyl und Naphthyl.

Bevorzugt stehen $R^{13}$, $R^{14}$ und $R^{15}$ unabhängig voneinander für Methyl, Ethyl, Butyl, Octyl, Phenyl, Kresyl, Cumyl oder Naphthyl. Besonders bevorzugt stehen $R^{13}$, $R^{14}$ und $R^{15}$ unabhängig voneinander für Methyl, Ethyl, Butyl, gegebenenfalls durch Methyl und/oder Ethyl substituiertes Phenyl.

Erfindungsgemäß einsetzbare Phosphorverbindungen gemäß Formel (VI) sind z.B. Tributylphosphat, Tris-(2-chlorethyl)phosphat, Tris-(2,3-dibrompropyl)phosphat, Triphenylphosphat, Trikresylphosphat, Diphenylkresylphosphat, Diphenyloctylphosphat, Diphenyl-2-ethylkresylphosphat, Tri-(isopropylphenyl)phosphat, Tris-(p-benzylphenyl)phosphat, Triphenylphosphinoxid, Methanphosphonsäuredimethylester, Methanphosphonsäuredipentylester und Phenylphosphonsäurediethylester.

Geeignete Flammschutzmittel sind auch dimere und oligomere Phosphate, wie beispielsweise in der EP-A-0 363 608 beschrieben.

Die erfindungsgemäßen Formmassen können als Flammschutzmittel Phosphorverbindungen gemäß Formel (VII) enthalten,

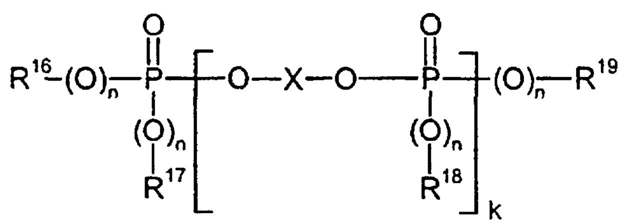

(VII),

In der Formel stehen $R^{16}$, $R^{17}$, $R^{18}$ und $R^{19}$, unabhängig voneinander für jeweils gegebenenfalls halogeniertes $C_1$-$C_8$-Alkyl, $C_5$-$C_6$-Cycloalkyl, $C_6$-$C_{20}$-Aryl oder C7-$C_{12}$-Aralkyl.

Bevorzugt stehen $R^{16}$, $R^{17}$, $R^{18}$ und $R^{19}$ unabhängig voneinander für $C_1$-$C_4$-Alkyl, Phenyl, Naphthyl oder Phenyl-$C_1$-$C_4$-alkyl. Die aromatischen Gruppen $R^{16}$, $R^{17}$, $R^{18}$ und $R^{19}$ können ihrerseits mit Halogen- und/oder Alkylgruppen, vorzugsweise Chlor, Brom und/oder $C_1$-$C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (VII) bedeutet einen ein- oder mehrkernigen aromatischen Rest mit 6 bis 30 C-Atomen. Dieser leitet sich vorzugsweise von Diphenolen der Formel (III) ab. Besonders bevorzugt sind Diphenylphenol, Bisphenol A, Resorcin oder Hydrochinon oder deren chlorierte oder bromierte Derivaten.

n in der Formel (VII) kann, unabhängig voneinander, 0 oder 1 sein, vorzugsweise ist n gleich 1.

k steht für Werte von 0 bis 30, vorzugsweise für einen durchschnittlichen Wert von 0,3 bis 20, besonders bevorzugt 0,5 bis 10, insbesondere 0,5 bis 6.

Einsetzbar sind auch Mischungen aus 10 bis 90 Gew.-%, vorzugsweise 12 bis 40 Gew.-%, wenigstens einer Monophosphorverbindung der Formel (VI) und wenigstens einer oligomeren Phosphorverbindung beziehungsweise eines Gemisches von oligomeren Phosphorverbindungen wie in EP-A-363 608 beschrieben sowie Phosphorverbindungen gemäß Formel (VII) in Mengen von 10 bis 90 Gew.-%, vorzugsweise 60 bis 88 Gew.-%, bezogen auf die Gesamtmenge an Phosphorverbindungen, eingesetzt.

Monophosphorverbindungen der Formel (VI) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid.

Die Mischungen aus monomeren und oligomeren Phosphorverbindungen der Formel (VII) weisen durchschnittliche k-Werte von 0,3 bis 20, bevorzugt 0,5 bis 10, insbesondere von 0,5 bis 6 auf.

Die genannten Phosphorverbindungen sind bekannt (vgl. z.B. EP-A-363 608, EP-A-640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

Die erfindungsgemäßen Formmassen enthaltend die Komponenten A bis E und gegebenenfalls weiteren bekannten Zusätzen wie Stabilisatoren, Farbstoffen, Pigmenten, Gleit- und Entformungsmitteln, Nukleiermittel sowie Antistatika, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert, wobei die Komponente E vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist daher auch ein Verfahren zur Herstellung der Formmassen.

Die erfindungsgemäßcn thermoplastischen Blends eignen sich aufgrund ihrer ausgezeichneten Flammfestigkeit und ihrer guten mechanischen Eigenschaften zur Herstellung von Formkörpern jeglicher Art, insbesondere solchen mit erhöhten Anforderungen an Bruchbeständigkeit und Chemikalienbeständigkeit.

Die Blends der vorliegenden Erfindung können zur Herstellung von Formkörpern jeder Art verwendet werden. Insbesondere können Formkörper durch Spritzguss hergestellt werden. Beispiele für herstellbare Formkörper sind: Gehäuseteile jeder Art, z.B. für Haushaltsgeräte wie Saftpressen, Kaffeemaschinen, Mixer, für Büromaschinen, wie Monitore, Drucker, Kopierer oder Abdeckplatten für den Bausektor und Teile für den Kfz-Sektor. Sie sind außerdem auf dem Gebiet der Elektrotechnik einsetzbar, weil sie sehr gute elektrische Eigenschaften haben.

Weiterhin können die erfindungsgemäßen Bends beispielsweise zur Herstellung von folgenden Formkörpern bzw. Formteilen verwendet werden:

Innenausbauteile für Schienenfahrzeuge, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, flächige Wandelemente, Gehäuse für Sicherheitseinrichtungen, Heckspoiler, wärmeisolierte Transportbehältnisse, Vorrichtung zur Haltung oder Versorgung von Kleintieren, Formteile für Sanitär- und Badeausrüstungen, Abdeckgitter für Lüfteröffnungen, Formteile für Garten- und Gerätehäuser, Gehäuse für Gartengeräte.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Blends zur Herstellung von Formkörpern jeglicher Art, vorzugsweise der oben genannten, sowie die Formkörper aus den erfindungsgemäßen Formmassen.

## Beispiele

### Komponente A

Lineares Polycarbonat auf Basis Bisphenol A mit einer relativen Lösungsviskosität von 1,252, gemessen in $CH_2Cl_2$ als Lösungsmittel bei 25°C und einer Konzentration von 0,5 g/100 ml.

**Komponente B**

B.1 Silikonpfropfkautschuk

1. Herstellung der Silikonkautschuk-Emulsion

38,4 Gew.-Teile Octamethylcyclotetrasiloxan, 1,2 Gew.-Teile Tetramethyltetravinylcyclotetrasiloxan und 1 Gew.-Teil Mercaptopropylmethyldimethoxysilan werden miteinander verrührt. 0,5 Gew.-Teile Dodecylbenzolsulfonsäure werden zugefügt, anschließend 58,4 Gew.-Teile Wasser innerhalb einer Stunde zugegeben. Dabei wird intensiv gerührt. Die Voremulsion wird mit Hilfe einer Hochdruckemulgiermaschine zweimal bei 200 bar homogenisiert. Man gibt weitere 0,5 Gew.-Teile Dodecylbenzolsulfonsäure hinzu. Die Emulsion wird 2 Stunden bei 85°C und anschließend 36 Stunden bei 20°C gerührt. Neutralisiert wird mit Hilfe von 5n-NaOH. Es resultiert eine stabile Emulsion mit einem Feststoffgehalt von ca. 36 Gew.-%. Das Polymer besitzt einen Gelgehalt von 82 Gew.-%, gemessen in Toluol; der mittlere Teilchendurchmesser $d_{50}$ beträgt 300 nm.

2. Herstellung des gepfropften Silikonkautschuks

In einem Reaktor werden vorgelegt:

2107 Gew.-Teile Latex gemäß 1) und
1073 Gew.-Teile Wasser.

Nach Initiierung mit einer Lösung von 7,5 Gew.-Teilen Kaliumperoxydisulfat in 195 Gew.-Teilen Wasser bei 65°C werden jeweils folgende Lösungen zur Herstellung des Pfropfkautschukes innerhalb von 4 Stunden gleichmäßig eingespeist:

| | |
|---|---|
| Lösung 1 | 540 Gew.-Teile Styrol und<br>210 Gew.-Teile Acrylnitril; |
| Lösung 2 | 375 Gew.-Teile Wasser und<br>15 Gew.-Teile Natriumsalz von $C_{14}$-$C_{18}$-Alkylsulfonsäuren. |

Anschließend wird jeweils innerhalb von 6 Stunden bei 65°C auspolymerisiert. Es resultiert ein Latex mit einem Feststoffgehalt von ca. 33 Gew.-%.

Nach Koagulation mit einer wässrigen Magnesiumchlorid/Essigsäurelösung, Filtration und Trocknung im Vakuum werden die Pfropfpolymerisate in Form weißer Pulver erhalten.

B.2 Acrylatpfropfkautschuk

Pfropfpolymerisat von 40 Gew.-Teilen eines Copolymerisates aus Styrol und Acrylnitril im Verhältnis von 72: 28 auf 60 Gew.-Teile teilchenförmigen vernetzten Polyacrylatkautschuk (mittlerer Teilchendurchmesser $d_{50}$ = 0,5 µm) hergestellt durch Emulsionspolymerisation.

B.3 EPDM-Pfropfkautschuk

Pfropfpolymerisat von 50 Gew.-Teilen eines Copolymerisats aus Styrol und Acrylnitril im Verhältnis von 72:28 auf 50 Gew.-Teile vemetzten EPDM-Kautschuk der Fa. Uniroyal Chemical Company, Handelsname Royaltuf 372 P20.

B.4 Pfropfpolymerisat von 45 Gew.-Teilen eines Copolymerisats aus Styrol und Acrylnitril im Verhältnis von 72:28 auf 55 Gew.-Teile teilchenförmigen vernetzten Polybutadienkautschuk (mittlerer Teilchendurchmesser $d_{50}$ = 0,40 µm), hergestellt durch Emulsionspolymerisation.

**Komponente C**

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

**Komponente D**

Phosphonatamin der Formel

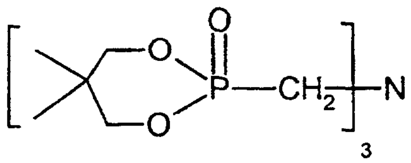

(XPM 1000 Entwicklungsprodukt Fa. Solutia Inc., St. Louis, Mo.)

**Komponente E**

Batch SAN/Teflon im Gewichtsverhältnis 1:1: Blendex 446, General Electric, N.Y USA.

**Herstellung und Prüfung der erfindungsgemäßen Formmassen**

Das Mischen der Komponenten erfolgt auf einem 3-1-Innenkneter. Die Formkörper werden auf einer Spritzgießmaschine Typ Arburg 270 E bei 260°C hergestellt.

Die Bestimmung der Wärmeformbeständigkeit nach Vicat B erfolgt gemäß DIN 53 460 (ISO 306) an Stäben der Abmessung 80 x 10 x 4 mm.

Das Spannungsrissverhalten (ESC-Verhalten) wird an Stäben der Abmessung 80 x 10 x 4 mm, Verarbeitungstemperatur 260°C, untersucht. Als Testmedium wird eine Mischung aus 60 Vol.-% Toluol und 40 Vol.-% Isopropanol verwendet. Die Probekörper werden mittels einer Kreisbogenschablone vorgedehnt (Vordehnung in Prozent) und bei Raumtemperatur im Testmedium gelagert. Das Spannungsrissverhalten wird über die Rissbildung bzw. den Bruch in Abhängigkeit von der Vordehnung im Testmedium beurteilt.

Die MVR-Messung (240/5) [$cm^3$/10 min] erfolgt nach ISO 1133.
Die Messung der Viskosität erfolgt nach DIN 54 811.

Wie aus der folgenden Tabelle hervorgeht, zeichnen sich die erfindungsgemäßen Formmassen durch eine günstige Eigenschaftskombination aus Flammschutz und mechanischen Eigenschaften aus. Überraschenderweise werden durch die gegenüber dem Stand der Technik (Dienkautschuk) geänderten Kautschukgrundlagen Kerbschlagzähigkcit und ESC-Verhalten, das ein Maß für die Chemikalienbeständigkeit ist, entscheidend verbessert. In der Spannungsrissbeständigkeit widerstehen die erfindungsgemäßcn Formmassen einem Bruch wesentlich länger, was für kritische Anwendungen (Teile mit komplizierten Geometrien) wichtig ist.

Tabelle:

| Formmassen und ihre Eigenschaften | | | | |
|---|---|---|---|---|
| **Beispiele** | **1** | **2** | **3** | **4 Vergleich** |
| Komponenten (Gew.-Teile) A | 67,60 | 67,60 | 67,60 | 67,60 |
| B.1 | 10,50 | - | - | - |
| B.2 | - | 10,50 | - | - |
| B.3 | - | - | 10,50 | - |
| B.4 | - | - | - | 10,50 |
| C | 8,80 | 8,80 | 8,80 | 8,80 |
| D | 11,90 | 11,90 | 11,90 | 11,90 |
| E | 0,8 | 0,8 | 0,8 | 0,8 |
| Entformungsmittel | 0,4 | 0,4 | 0,4 | 0,4 |

Tabelle: (fortgesetzt)

| Formmassen und ihre Eigenschaften | | | | |
|---|---|---|---|---|
| **Beispiele** | **1** | **2** | **3** | **4 Vergleich** |
| Eigenschaften | | | | |
| Vicat B120 (ISO 306) (°C) | 116 | 116 | 116 | 116 |
| ESC-Verhalten | | | | |
| Bruch bei $\varepsilon_x$ (%) | AL* 2,4 (10 min) | 2,4 (5 min) | 2,4 (5 min) | 2,0 (5 min) |
| UL 94V 3,2 mm | V-0 | V-0 | V-0 | V-0 |
| MVR [$cm^3$/10 min] | 12,8 | 25,0 | 15,0 | 12,2 |
| Viskositätsfunktion 260°C/1500$s^{-1}$ | 116,7 | 94,1 | 90,3 | 117,4 |

*AL = angelöst

**Patentansprüche**

1. Blends enthaltend

A) Polycarbonat und/oder Polyestercarbonat,

B) mindestens ein kautschukelastisches Pfropfpolymerisat ausgewählt aus der Gruppe bestehend aus Silikon-, EP(D)M- und Acrylatkautschuk als Pfropfgrundlage,

C) gegebenenfalls mindestens ein thermoplastisches Polymer ausgewählt aus der Gruppe bestehend aus Vinyl(co)polymerisaten und Polyalkylenterephthalaten und

D) 0,1 bis 30 Gew.-Teile (bezogen auf die Gesamtmischung) Phosphonatamin der allgemeinen Formel (I)

$$A_{3-y}\text{-}NB_y \qquad (I),$$

in welcher

A für einen Rest der Formel (IIa)

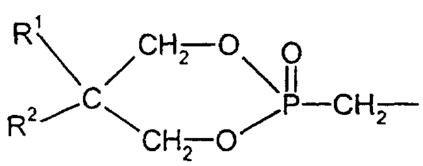

(IIa)

oder (IIb)

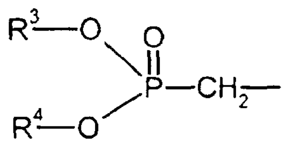

(IIb)

steht,

| | |
|---|---|
| $R^1$ und $R^2$ | unabhängig voneinander für unsubstituiertes oder substituiertes $C_1$-$C_{10}$-Alkyl oder für unsubstituiertes oder substituiertes $C_6$-$C_{10}$-Aryl, stehen, |
| $R^3$ und $R^4$ | unabhängig voneinander für unsubstituiertes oder substituiertes $C_1$-$C_{10}$-Alkyl oder unsubstituiertes oder substituiertes $C_6$-$C_{10}$-Aryl stehen oder |
| $R^3$ und $R^4$ | zusammen für unsubstituiertes oder substituiertes $C_3$-$C_{10}$-Alkylen stehen, |
| y | die Zahlenwerte 0, 1 oder 2 bedeuten und |
| B | unabhängig für Wasserstoff, gegebenenfalls halogeniertes $C_2$-Cg-Alkyl, unsubstituiertes oder substituiertes $C_6$-$C_{10}$-Aryl steht. |

**2.** Blends gemäß Anspruch 1, enthaltend
40 - 99 Gew.-Teile Komponente A,
0,5 - 60 Gew.-Teile Komponente B,
0 - 45 Gew.-Teile Komponente C,
0,1 - 25 Gew.-Teile Komponente D, und
0 - 5 Gew.-Teile fluoriertes Polyolefin.

**3.** Blends gemäß Anspruch 1 bis 2, enthaltend 2 bis 20 Gew.-Teile D.

**4.** Blends gemäß Anspruch 1 bis 3, wobei Komponente B) ausgewählt ist aus einem oder mehreren Pfropfpolymerisaten von

B.1 5 bis 95 Gew.-% wenigstens eines Vinylmonomeren auf

B.2 95 bis 5 Gew.-% einer oder mehrerer Pfropfgrundlagen mit Glasübergangstemperaturen <10°C ausgewählt aus der Gruppe bestehend aus Silikon-, Acrylat- und EP(D)M-Kautschuken.

**5.** Blends gemäß Anspruch 4, wobei Vinylmonomere B.1 ausgewählt sind aus:

B.1.1 50 bis 99 Gew.-Teilen Vinylaromaten und/oder kemsubstituierten Vinylaromaten und/oder Methacrylsäure-($C_1$-$C_8$)-Alkylester und

B.1.2 1 bis 50 Gew.-Teilen Vinylcyanide, (Meth)Acrylsäure-($C_1$-$C_8$)-Alkylester und/oder Derivate ungesättigter Carbonsäuren.

**6.** Blends gemäß Anspruch 5, wobei

B.1.1 ausgewählt ist aus Styrol, $\alpha$-Methylstyrol oder Methylmethacrylat oder Mischungen hieraus und

B.1.2 ausgewählt ist aus Acrylnitril, Methacrylnitril, Maleinsäureanhydrid oder Methylmethacrylat oder Mischungen hieraus.

**7.** Blends gemäß Anspruch 1 bis 6, wobei Komponente C.1 Vinyl(co)polymerisate von mindestens einem Monomer aus der Gruppe der Vinylaromaten, Vinylcyaniden, (Meth)Acrylsäure-($C_1$-$C_8$)-alkylester, ungesättigte Carbonsäuren sowie Derivate ungesättigter Carbonsäuren sind.

**8.** Blends nach einem der Ansprüche 1 bis 7, enthaltend Phosphonatamine ausgewählt aus der Gruppe 5,5,5',5',5'',5''-Hexamethyltris(1,3,2-dioxaphosphorinanmethan)amino-2,2',2''-trioxid, 1,3,2-Dioxaphosphorinan-2-methanamin, N-butyl-N[(5,5-dimethyl-1,3,2-dioxaphosphorinan-2-yl)methyl]-5,5-dimethyl-, P,2-dioxide; 1,3,2-Dioxaphosphorinane-2-methanamin, N-[[5,,5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorman-2-methanimin, N-[(5,5-dimethyl-1,3,2-dioxaphosphorinan-2-yl)methyl]-N-ethyl-5,5-dimethyl-, P,2-dioxid, 1,3,2-Dioxaphosphorinan-2-methanamin, N-butyl-N-[(5,5-dichloromethyl-1,3,2-dioxaphosphorinan-2-yl)-methyl]-5,5-di-chloromethyl-, P,2-dioxid, 1,3,2-Dioxaphosphorinan-2-methanamin, N-[(5,5-di-chloromethyl-1,3,2-dioxoaphosphorinan-2-yl)methyl]-5,5-di-chloromethyl-N-phenyl-, P,2-dioxid; 1,3,2-Dioxaphosphorinan-2-methanamin, N,N-di-(4-chlorobutyl)-5,5-dimethyl-2-oxide; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P2-dioxid.

**9.** Blends gemäß der vorhergehenden Ansprüche, enthaltend wenigstens ein Additiv ausgewählt aus der Gruppe der Gleit- und Entformungsmittel, Nukleiermittel, Antistatika, Stabilisatoren, Farbstoffe und Pigmente.

**10.** Blends gemäß der vorhergehenden Ansprüche enthaltend ein Flammschutzmittel, welches verschieden von Komponente D ist.

**11.** Verfahren zur Herstellung von Formmassen gemäß der vorhergehenden Ansprüche, wobei man die Komponenten A bis E und gegebenenfalls Additive vermischt und schmelzcompoundiert.

**12.** Verwendung der Formmassen gemäß der Ansprüche 1 bis 11 zur Herstellung von Formkörpern.

**13.** Formkörper bzw. Formteile, erhältlich aus Formmassen gemäß der Ansprüche 1 bis 11.

**14.** Gehäuseteile gemäß Anspruch 13.

## Claims

**1.** Blends which contain

A) polycarbonate and/or polyestercarbonate,

B) at least one rubber-elastic graft polymer, from the group consisting of silicone, EP(D)M and acrylate rubbers as graft substrate,

C) optionally, at least one thermoplastic polymer, chosen from the group consisting of vinyl (co)polymers and polyalkylene terephthalates and

D) 0.1 to 30 parts by wt. (with respect to the entire mixture) of a phosphonate amine of the general formula (I)

$$A_{3-y}\text{-N-}B_y \quad \text{(I)},$$

in which

A represents a group of the formula (IIa)

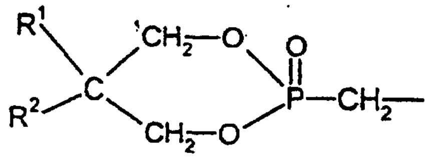

(IIa)

or (IIb)

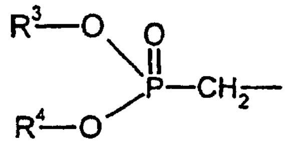

(IIb)

| | |
|---|---|
| $R^1$ and $R^2$, | independently, represent an unsubstituted or substituted $C_1$-$C_{10}$ alkyl group or an unsubstituted or substituted $C_6$-$C_{10}$ aryl group, |
| $R^3$ and $R^4$, | independently, represent an unsubstituted or substituted $C_1$-$C_{10}$ alkyl group or an unsubstituted or substituted $C_6$-$C_{10}$ aryl group or |
| $R^3$ and $R^4$ | together represent an unsubstituted or substituted $C_3$-$C_{10}$ alkylene group, |
| y | has the numerical value 0, 1 or 2 and |
| B | independently, represents hydrogen, an optionally halogenated $C_2$-$C_8$ alkyl group, or an unsubstituted or substituted $C_6$-$C_{10}$ aryl group. |

**2.** Blends in accordance with claim 1, containing
40 - 99 parts by wt. of component A,
0.5 - 60 parts by wt. of component B,
0 - 45 parts by wt. of component C,
0.1 - 25 parts by wt. of component D, and
0 - 5 parts by wt. of a fluorinated polyolefin.

**3.** Blends according to claims 1 and 2, containing 2 to 20 parts by wt. of D.

**4.** Blends according to claims 1 to 3, wherein component B) is selected from one or more graft polymers of

B.1 5 to 95 wt.% of at least one vinyl monomer on

B.2 95 to 5 wt.% of one or more graft substrates with glass transition temperatures of <10°C selected from the group consisting of silicone, acrylate and EP(D)M rubbers.

**5.** Blends according to claim 4, wherein vinyl monomers B.1 are selected from:

B.1.1 50 to 99 parts by wt. of vinyl aromatic compounds and/or ring-substituted vinyl aromatic compounds and/or $C_1$-$C_8$ alkyl methacrylates and

B.1.2 1 to 50 parts by wt. of vinyl cyanides, $C_1$-$C_8$ alkyl (meth)acrylates and/or derivatives of unsaturated carboxylic acids.

**6.** Blends according to claim 5, wherein

B.1.1 is selected from styrene, α-methylstyrene or methyl methacrylate or mixtures of these and

B.1.2 is selected from acrylonitrile, methacrylonitrile, maleic anhydride or methyl methacrylate or mixtures of these.

**7.** Blends according to claims 1 to 6, wherein component C.1 consists of vinyl (co)polymers of at least one monomer from the group of vinyl aromatic compounds, vinyl cyanides, $C_1$-$C_8$ alkyl (meth)acrylates, unsaturated carboxylic acids and derivatives of unsaturated carboxylic acids.

**8.** Blends according to any one of claims 1 to 7, containing phosphonate amines selected from the group 5,5,5',5', 5",5"-hexamethyl-tris-(1,3,2-dioxaphosphorinane-methane)-amino-2,2',2"-trioxide,1,3,2-dioxaphosphorinane-2-methanamine, N-butyl-N[(5,5-dimethyl-1,3,2-dioxaphosphorinan-2-yl)-methyl]-5,5-dimethyl-, P,2-dioxide; 1,3,2-dioxaphosphorinane-2-methanamine, N-[(5,5-dimethyl-1,3,2-dioxaphosphorinan-2-yl)-methyl]-5,5-dimethyl-N-phenyl- P,2-dioxide; 1,3,2-dioxaphosphorinane-2-methanamine, N,N-dibutyl-5,5-dimethyl-, 2-oxide, 1,3,2 dioxaphosphorinane-2-methanimine, N-[(5,5-dimethyl-1,3,2-dioxaphosphorinan-2-yl)-methyl]-N-ethyl-5,5-dimethyl-, P,2-dioxide, 1,3,2-dioxaphosphorinane-2-methanamine, N-butyl-N-[(5,5-dichloromethyl-1,3,2-dioxaphosphorinan-2-yl)-methyl]-5,5-di-chloromethyl-, P,2-dioxide, 1,3,2-dioxa-phosphorinane-2-methanamine, N-[(5,5-dichloromethyl-1,3,2-dioxaphosphorinan-2-yl)-methyl]-5,5-di-chloromethyl-N-phenyl-, P,2-dioxide; 1,3,2-dioxaphosphorinane-2-methanamine, N,N-di-(4-chlorobutyl)-5,5-dimethyl-2-oxide; 1,3,2-dioxaphosphorinane-2-methanimine, N-[(5,5-dimethyl-1,3,2-dioxaphosphorinan-2-yl)-methane]-N-(2-chloroethyl)-5,5-di(chloromethyl)-, P2-dioxide.

**9.** Blends according to any of the preceding claims, containing at least one additive selected from the group consisting of lubricants and mould release agents, nucleating agents, antistatic agents, stabilisers, colorants and pigments.

**10.** Blends according to any of the preceding claims, containing a flame retardant which is different from component D.

**11.** A process for preparing moulding compositions in accordance with the preceding claims, wherein the components A to E and optionally additives are mixed and melt compounded.

**12.** Use of the moulding compositions in accordance with claims 1 to 11 to produce moulded articles.

**13.** Moulded articles or moulded parts, obtainable from moulding compositions in accordance with claims 1 to 11.

**14.** Housing parts in accordance with claim 13.

## Revendications

**1.** Mélanges contenant

A) du polycarbonate et/ou du polyestercarbonate,
B) au moins un polymère greffé élastique de caoutchouc choisi parmi un caoutchouc de silicone, d'EP(D)M et d'acrylate comme base de greffage,
C) éventuellement au moins un polymère thermoplastique choisi parmi des (co)polymères vinyliques et des poly(alkylène-téréphtalates) et
D) de 0,1 à 30 parties en poids (rapportés au mélange total) d'amine de phosphonate de la formule générale (I)

$$A_{3-y}\text{-}NB_y \quad \text{(I)},$$

dans laquelle

A représente un reste de la formule (IIa)

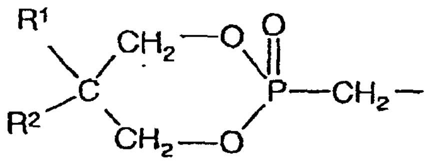

(IIa)

ou (IIb)

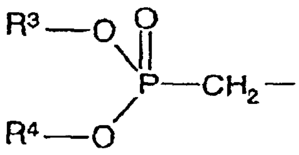

(IIb)

$R^1$ et $R^2$ représentent indépendamment un groupe alkyle en $C_1$-$C_{10}$ non substitué ou substitué ou un groupe aryle en $C_6$-$C_{10}$ non substitué ou substitué,
$R^3$ et $R^4$ représentent indépendamment un groupe alkyle en $C_1$-$C_{10}$ non substitué ou substitué ou un groupe aryle en $C_6$-$C_{10}$ non substitué ou substitué, ou
$R^3$ et $R^4$ représentent ensemble un groupe alkylène en $C_3$-$C_{10}$ non substitué ou substitué,
y représente le nombre 0, 1 ou 2 et
B représente indépendamment un atome d'hydrogène, un groupe alkyle en $C_2$-$C_8$ éventuellement halogéné, un groupe aryle en $C_6$-$C_{10}$ non substitué ou substitué,

**2.** Mélanges selon la revendication 1, contenant
40-99 parties en poids de constituant A,
0,5-60 parties en poids de constituant B,
0-45 parties en poids de constituant C,
0,1-25 parties en poids de constituant D, et
0-5 parties en poids de polyoléfine fluorée.

**3.** Mélanges selon les revendications 1 à 2, contenant de 2 à 20 parties en poids de D.

**4.** Mélanges selon les revendications 1 à 3, le constituant B) étant choisi parmi un ou plusieurs polymères greffés de

B.1 5 à 95 % en poids d'au moins un monomère vinylique sur
B.2 95 à 5 % en poids d'une ou plusieurs bases de greffage avec des températures de transition vitreuse <10°C choisies parmi des caoutchoucs de silicones, d'acrylates et d'EP(D)M.

**5.** Mélanges selon la revendication 4, les monomères vinyliques B.1 étant choisis parmi :

B.1.1 50 à 99 parties en poids de composés aromatiques vinyliques et/ou de composés aromatiques vinyliques substitués au noyau et/ou d'esters alkyliques en $C_1$-$C_8$ d'acide méthacrylique et
B.1.2 de 1 à 50 parties en poids de cyanure de vinyle, d'ester alkylique en $C_1$-$C_8$ d'acide (méth)acrylique et/ou de dérivés d'acides carboxyliques insaturés.

**6.** Mélanges selon la revendication 5,

B.1.1 étant choisi parmi le styrène, l'$\alpha$-méthylstyrène ou le méthacrylate de méthyle ou des mélanges de ceux-ci et
B.1.2 étant choisi parmi l'acrylonitrile, le méthacrylonitrile, l'anhydride d'acide maléique ou le méthacrylate de méthyle ou des mélanges de ceux-ci.

7. Mélanges selon les revendications 1 à 6, les constituants C.1 étant des (co)polymères vinyliques d'au moins un monomère choisi parmi des composés aromatiques vinyliques, des cyanures de vinyle, des esters alkyliques en $C_1$-$C_8$ d'acide (méth)acrylique, des acides carboxyliques insaturés ainsi que des dérivés d'acides carboxyliques insaturés.

8. Mélanges selon l'une quelconque des revendications 1 à 7, contenant une amine de phosphonate choisie parmi le 5,5,5',5',5",5"-hexaméthyltris(1,3,2-dioxaphosphorinaneméthane)amine-2,2',2"-trioxyde, la 1,3,2-dioxaphosphorinan-2-méthanamine, le N-butyl-N[(5,5-diméthyl-1,3,2-dioxaphosphorinan-2-yl)méthyl]-5,5-diméthyl-, P, 2-dioxyde ; la 1,3,2-dioxaphosphorinan-2-méthanamine, le N-[(5,5-diméthyl-1,3,2-dioxaphosphorinan-2-yl)méthyl]-5,5-diméthyl-N-phényl-, P,2-dioxyde; la 1,3,2-dioxaphosphorinan-2-méthanamine, le N,N-dibutyl-5,5-diméthyl-, 2-oxyde, la 1,3,2-dioxaphosphorinan-2-méthanimine, le N-[(5,5-diméthyl-1,3,2-dioxaphosphorinan-2-yl)méthyl]-N-éthyl-5,5-diméthyl-, P,2-dioxyde, la 1,3,2-dioxaphosphorinan-2-méthanamine, le N-butyl-N-[(5,5-di-chlorométhyl-1,3,2-dioxaphosphorinan-2-yl)-méthyl]-5,5-dichlorométhyl-, P,2-dioxyde, la 1,3,2-dioxaphosphorinan-2-méthanamine, le N-[(5,5-dichlorométhyl-1,3,2-dioxaphosphorinan-2-yl)méthyl]-5,5-dichlorométhyl-N-phényl-, P, 2-dioxyde ; la 1,3,2-dioxaphosphorinan-2-méthanamine, le N,N-di-(4-chlorobutyl)-5,5-diméthyl-2-oxyde ; la 1,3,2-dioxaphosphorinan-2-méthanamine, le N-[(5,5-diméthyl-1,3,2-dioxaphosphorinan-2-yl)-méthane]-N-(2-chloroéthyl)-5,5-di-(chlorométhyl)-, P,2-dioxyde.

9. Mélanges selon l'une quelconque des revendications précédentes contenant au moins un additif choisi parmi un agent lubrifiant et de démoulage, un agent de nucléation, une matière antistatique, des stabilisateurs, des colorants et des pigments.

10. Mélanges selon l'une quelconque des revendications précédentes contenant un agent pare-flammes, lequel est différent du constituant D.

11. Procédé pour la préparation de masses moulées selon l'une quelconque des revendications précédentes, les constituants A à E et éventuellement des additifs étant mélangés et combinés à l'état de fusion

12. Utilisation des masses moulées selon l'une quelconque des revendications 1 à 11 pour la préparation de corps moulés.

13. Corps moulés respectivement pièces moulées obtenus à partir des masses moulées selon les revendications 1 à 11.

14. Pièce de boîtier selon la revendication 13.